# EUROPEAN PATENT APPLICATION

(11) **EP 4 614 421 A1**
(43) Date of publication of application: **10.09.2025**
(21) Application number: 24161281.1
(22) Date of filing: 04.03.2024
(51) Int. Cl.: G06Q 30/0241, G06Q 10/107

(54) **METHOD FOR OBTAINING AN OPT-IN OF A USER AND AN OPT-IN SYSTEM THEREFOR**

(71) Applicant: Kajomi GmbH, 86938 Schondorf am Ammersee (DE)
(72) Inventor: Kordulla, Nikolai, 86938 Schondorf am Ammersee (DE); Hoffmann, Michael, 86938 Schondorf am Ammersee (DE)
(74) Representative: Thum, Bernhard

(57) **Abstract**

The invention relates to a method for obtaining an opt-in of a user, more particularly an opt-in of a user for providing a service to the user, the method to be implemented using a server system (10) having a computation means (12) which is configured to communicate with a user device (14). The method comprises the steps of providing service information including a server system address; sending, by the user device (14), a message from a user address to the server system address by an instruction of the user; receiving, by the computation means (12), the message sent from the user address to the server system address; validating, by the computation means (12), whether the message represents an opt-in by the steps of evaluating whether the message includes an opt-in statement; and verifying whether the message was allowed to be sent from the user address. The invention further relates to an opt-in system (100) therefor.

## Description

The present invention relates to a method for obtaining an opt-in of a user, more particularly to a method for obtaining an opt-in of a user for providing a service to the user. The present invention further relates to an opt-in system for obtaining an opt-in of a user, more particularly to an opt-in system for obtaining an opt-in of a user for providing a service to the user.

Opt-in refers to an action by a user to agree or give consent. The opt-in of the user indicates the consent of the user to get involved in a service, to participate in an activity, or to receive communication without being compelled to do so. A service provider intends to alleviate the user from the necessity of time-consuming or complex actions to provide the opt-in. The efficiency and convenience of the provision of the opt-in may therefore be promoted for the user. Furthermore, the service provider intends to obtain the opt-in of the user in an efficient, lean and reliable way. For example, an automobile dealer exhibits many vehicles, which are viewed by many customers at the same time. The automobile dealer provides the service to deliver more information about its vehicles, to make an offer for a specific vehicle, or to arrange a later appointment. The automobile dealer usually obtains an opt-in of a user for one of the provided services through personal communication. This can be time-consuming for both, the automobile dealer being the service provider and the interested customer being the user. Therefore, an electronic opt-in provided and obtained by electronic means is becoming accepted in the present days. In particular, an electronic opt-in as email opt-in is commonly used.

Furthermore, the opt-in of a user for providing a service to the user is required by law in many European countries and elsewhere. It turns out that a validated opt-in is the only way that the service provider can prove that the user properly opted in, if challenged legally. Legally, it is not specified under which conditions the opt-in is a valid opt-in. The email opt-in is conventionally obtained by a double opt-in method. For example, in case a provided service is a newsletter, the double opt-in method requires that the user fills out a sign-up form to subscribe to the newsletter. After submitting the form by the user to the service provider, a confirmation email is sent to the provided user address. Then, the user must click the confirmation link in the email to complete the subscription to the newsletter. This double opt-in method for newsletter registration works by adding an extra confirmation step to verify each email address added to a contact list. However, it is still legally controversial if the double opt-in method results in a valid opt-in since it is not verifiable whether the confirmation link was retrieved by the user.

US 2014/0032285 A1 describes an email payment gateway configured to enable users to receive offers using print media quick response (QR) codes. A user views an advertisement or product having packing with a QR code and scans the QR code. Scanning the QR code generates an email addressed to the email payment gateway requesting information on the product, which is sent to the email payment gateway. The email payment gateway receives the email and responds to the user with an email that includes information on the products in the advertisement. A disadvantage of this solution is that the email payment gateway is not able to determine for which service the user intended to opt in. Furthermore, it is also possible for someone with bad intentions, such as a spammer, to send an email using the user's email address, e.g. by using email spoofing. The above-described email payment gateway is not able to detect this, and rather provides support for such spammers by responding to the user's email address.

The present invention accordingly aims at providing a method or system for obtaining an opt-in of a user, which are in particular suitable for an efficient, lean and convenient opt-in process that allows to obtain the opt-in in a safe and secure manner.

According to the present invention this object is solved by providing a method with the features of claim 1 and by providing an opt-in system with the features of claim 7. Preferred embodiments are defined in the dependent claims.

The method for obtaining an opt-in of a user, more particularly an opt-in of a user for providing a service to the user, is to be implemented using a server system having a computation means. The computation means is configured to communicate with a user device. The method comprises the steps of providing service information including a server system address; sending, by the user device, a message from a user address to the server system address by an instruction of the user; receiving, by the computation means, the message sent from the user address to the server system address; and validating, by the computation means, whether the message represents an opt-in. The step of validating is performed by the steps of evaluating whether the message includes an opt-in statement; and verifying whether the message was allowed to be sent from the user address.

The opt-in system for obtaining an opt-in of a user, more particularly an opt-in of a user for providing a service to the user, comprises the opt-in system comprising a user device, and a server system having a computation means configured to communicate with the user device. The user device is configured to send a message, by an instruction of the user, from a user address to a server system address based on provided service information including the server system address. The computation means is configured to receive a message sent from a user address to the server system address; and to validate whether the message represents an opt-in by evaluating whether the message includes an opt-in statement and by verifying whether the message was allowed to be sent from the user address.

The method or the opt-in system provides an efficient way to obtain an opt-in of a user. The user can capture the provided service information and based thereon sent a single message to the server system to opt in for a service. Without any further manual action by the user or a service provider, it is validated whether the message represents an opt-in. Before sending the message, the user can study the content of the message and its opt-in statement. Only if the user intends to make the opt-in according to the statement, the user instructs the sending of the message so that it is secured for both the service provider and the user for which service the user has opted in. The user may be a potential service recipient, service subscriber or customer. By verifying that the message was allowed to be sent from the user address, the opt in process is secured against someone with bad intentions, such as a spammer.

The server system may include one or more servers. The server system may include one or more virtual servers. The server system may include a mail server, and/or a web server and/or another type of server. The server system may be configured to act as a server of a client-server system. The server system has a computation means. The computation means may be formed by one or more computers. The user device may be formed by a personal computer, a laptop computer, a tablet computer, a mobile electronic device, or a mobile phone. The user device may be configured to act as a client of a client-server system. The computation means may be configured to communicate with the user device via public interconnected computer networks, such as the Internet, and/or via private computer networks. The computation means may be configured to exchange data with the user device upon request of the user device. The user device may be configured to detect instructions by the user. The user device may include, but is not limited to, a mouse/keyboard combination, a touchscreen, a speaker/display combination, a camera or any combination thereof.

The user device may be configured to send the message as a text message, an email message, a multimedia service (MMS) message, a tweet, an instant message, or a message via a messenger provider, or post. The user device may be configured to send the message via an open transfer protocol, preferably a fundamental protocol in the Internet protocol suite, further preferably the Simple Mail Transfer Protocol. The open transfer protocol allows the user to send the message without using a specific software or network and/or without a prior registration. The email message may be formed by a HyperText Markup Language (HTML) email message, Rich Text Format (RTF) email message, and/or may be defined according to any other appropriate format. Additionally, a combination of these messages may be used. The server system address and the user address may be formed by an email address and/or a telephone number and/or a network address, such as an Internet Protocol address, and/or any other appropriate type.

The communication between the user device and the computation means may be performed by technologies such as Simple Mail Transfer Protocol (SMTP), Post Office Protocol (POP) technology, Internet Message Access Protocol (IMAP), Remote Procedure Call (RPC) technology, HyperText Transfer Protocol (HTTP), Hypertext Transfer Protocol Secure (HTTPS) and/or other appropriate technologies. The communication between the user device and the computation means may be performed directly and/or via one or more further servers.

The opt-in system may further comprise a sending server having a processing unit configured to transfer messages from the user device to the computation means; a first verification server having a first communication means configured to provide a list of authorized processing units of sending servers with respect to addresses. The computation means may be configured to communicate with the first communication means to verify whether the processing unit of the sending server was allowed to send the message from the user address.

The step of verifying may comprise to verify, by the computation means configured to communicate with a/the first communication means of a/the first verification server providing a/the list of authorized processing units of sending servers with respect to addresses, whether a/the processing unit of a/the sending server used by the user device to transfer the message is allowed to send messages from the user address based on the list. The list may comprise IP addresses of authorized processing units of sending servers with respect to addresses.

The sending server may include one or more servers. The sending system may include one or more virtual servers. The sending server may include a mail server, and/or a web server and/or another type of server. The processing unit may be formed by one computer. The processing unit may be configured to communicate with the user device and/or the computation means by technologies such as Simple Mail Transfer Protocol (SMTP), Post Office Protocol (POP) technology, Internet Message Access Protocol (IMAP), Remote Procedure Call (RPC) technology, HyperText Transfer Protocol (HTTP), Hypertext Transfer Protocol Secure (HTTPS) and/or other appropriate technologies.

The opt-in system may comprise a second verification server having a second communication means configured to provide public keys with respect to digital signatures of addresses. The computation means may be configured to communicate with the second communication means to verify a digital signature of the message based on a public key of the user address.

The step of verifying may comprise to verify, by the computation means configured to communicate with a/the second communication means of a/the second verification server providing public keys with respect to digital signatures of addresses, a digital signature of the message based on a public key of the user address.

The first verification server and the second verification server may be different verification servers or formed by one verification server. The first communication means and the second communication means may be different communication means or may be formed by one communication means. The first verification server and/or the second verification server may be formed by a hierarchical and distributed naming system for computers, such as to provide functions of the Domain Name System (DNS), and/or other appropriate technologies.

The computation means may be configured to use email authentication methods to verify whether the message in form of an email message was allowed to be sent from the user address, such as DomainKeys Identified Mail (DKIM), and/or Sender Policy Framework (SPF) and/or Domain-based Message Authentication, and/or Reporting and Conformance (DMARC) and/or other appropriate technologies.

The computation means may be configured to evaluate whether the message includes an opt-in statement by comparing a content of the message with a predetermined content. The provided service information may further include a content proposal. The predetermined content may correspond to the content proposal. The content proposal may include an opt-in statement. The computation means may be configured to evaluate by checking whether the predetermined content is included in the content of the message. The content proposal may further include its hash value. The computation means may be configured to evaluate whether the message includes an opt-in statement by checking whether the hash value included in the content of the message corresponds to a hash value of the content of the message. The step of evaluating may be performed by comparing, by the computation means, a content of the message with a predetermined content. The step of evaluating may include checking, by the computation means, whether the predetermined content is included in the content of the message. The step of evaluating may include checking, by the computation means, whether the hash value included in the content of the message corresponds to a hash value of the content of the message.

The comparison of the content of the message with a predetermined content is a reliable way to evaluate whether the message includes an opt-in statement for a service. Providing the service information with a content proposal is convenient for the user. The user can simply adopt the content proposal in its message to the server system address. Further, providing the service information with its hash value makes the evaluation by the computation means more efficient.

The user device may be configured to read a machine-readable optical image, preferably a QR code, including partially the service information. The user device may be configured to retrieve data via a digital reference, preferably by a link, the digital reference preferably provided in the machine-readable optical image, the data including partially the service information.

The step of providing the service information may comprise providing a/the machine-readable optical image, preferably a/the QR code, readable by the user device and including partially the service information. The step of providing the service information may comprise providing a digital reference, preferably by a/the link, to data retrievable by the user device, the digital reference preferably provided in the machine-readable optical image, the data including partially the service information.

Providing the service information by the readable optical image makes it easy for the user to adopt information, such as the server system address, in the message to be sent to the server address. In case the service information is rather extensive, the readable optical image could become unsuitable, and therefore a digital reference is more suitable to provide the service information.

The user device may further be configured to create a prepopulated message suitable to be sent as the message to the computation means based on the provided service information. The user device may further be configured to create the prepopulated message by a command included in the provided service information, preferably so that the prepopulated message includes a content proposal corresponding to the predetermined content, and/or the server system address as recipient, and/or the user address as sender. The command may be formed by a mailto link, such as a HTML mailto email link, and/or any other appropriate technologies.

The method may further comprise a step of creating a/the prepopulated message suitable to be sent as the message to the computation means, by the user device, based on the provided service information, The step of creating may further comprise creating the prepopulated message, by the user device, by a/the command included in the provided service information, preferably, so that the prepopulated message includes a/the content proposal corresponding to the predetermined content, and/or the server system address as recipient, and/or the user address as sender.

Prepopulating the message makes it convenient for the user to adopt the content proposal included in the service information to the message. Therefore, the user comfort is improved and the probability of sending the message by the user is increased. Prepopulating the message also prevents typing or copy paste errors of the user. The user can use the command such as a mailto link for an efficient creation of the message containing the content proposal. Before sending the message, the user can study the content of the message and its opt-in statement. The user could therefore also cancel making the opt-in if he/she disagrees with the content of the message.

The computation means may further be configured to provide partially the provided service information upon a request of the user communicated by the user device to the computation means, preferably by retrieving data via the digital reference. The user device may further be configured to send the message via a different communication way than the communication way used by the computation means for providing partially the service information upon the request of the user to the user device. The step of providing the service information may comprise providing partially the service information by the computation means upon a/the request of the user by the user device communicated to the computation means, preferably by retrieving data via the digital reference. The step of sending the message, by the user device, may be performed by a different communication way than the communication way used by the computation means for providing partially the service information upon the request of the user to the user device. The computation means may further be configured to provide partially the provided service information to the user device via an open transfer protocol, preferably a fundamental protocol in the Internet protocol suite, further preferably the HyperText Transfer Protocol (HTTP), or Hypertext Transfer Protocol Secure (HTTPS). The step of providing the service information may comprise providing partially the service information by the computation means to the user device via an open transfer protocol, preferably a fundamental protocol in the Internet protocol suite, further preferably the HyperText Transfer Protocol (HTTP), or Hypertext Transfer Protocol Secure (HTTPS).

The partial provision of the service information by the computation means allows to provide the user device with individual service information, such as an individual service or a time stamp of the provision.

The computation means may further be configured to store the user address and/or the message, and/or validation results of the obtained opt-in in a storage means of the server system in accordance with the obtained opt-in. The method may further comprise the step of storing, by the computation means, the user address and/or the message, and/or validation results of the obtained opt-in in a/the storage means of the server system in accordance with the obtained opt-in.

The computation means may further be configured to use the user address in accordance with the obtained opt-in, preferably, to send a service message to the user address, wherein the user device may further be configured to receive the service message. The method may further comprise the step of using, by the computation means, the user address in accordance with the obtained opt-in, preferably, by sending a/the service message to the user address, receivable by the user device.

A preferred embodiment of the present invention will be described below by reference to the attached drawings, in which:
- Figure 1: shows a schematic overview of an opt-in system according to one embodiment; and
- Figure 2: shows a flowchart of a method for obtaining an opt-in of a user according to the embodiment of Fig. 1.

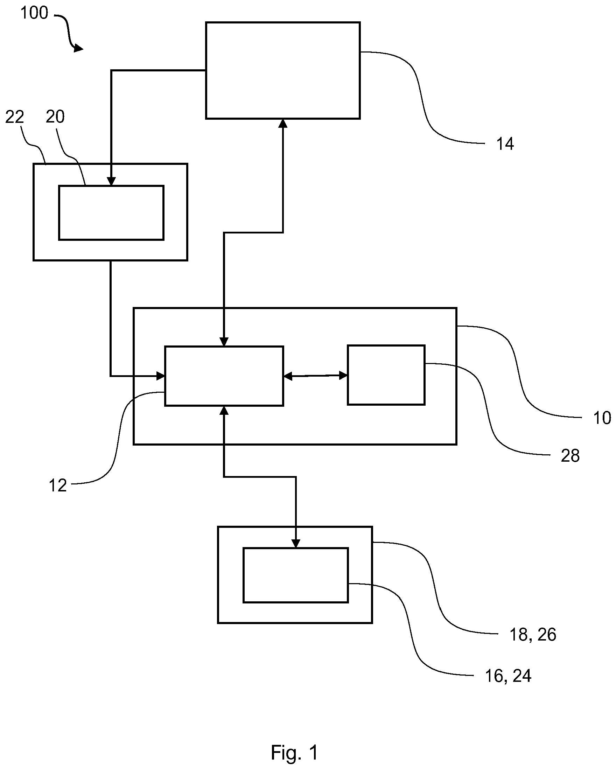

Figure 1 shows the opt-in system 100 according to an embodiment of the present invention, designed so as to obtain an opt-in of a user for providing a service to the user. The opt-in system 100 comprises a user device 14, and a server system 10 having a computation means 12 configured to communicate with the user device 14.

The user device 14 is configured to send a message, by an instruction of the user, from a user address to a server system address based on provided service information including the server system address. The computation means 12 is configured to receive a message sent from a user address to the server system address; and to validate whether the message represents an opt-in by evaluating whether the message includes an opt-in statement and by verifying whether the message was allowed to be sent from the user address.

The server system 10 includes a mail server and a web server. The server system 10 acts as a server of a client-server system. The computation means 12 is formed by more computers. The user device 14 is formed by a mobile phone. The user device 14 acts as a client of a client-server system. The computation means 12 is configured to communicate with the user device 14 via the Internet. The computation means 12 is configured to exchange data with the user device upon request of the user device 14. The user device 14 has a touchscreen and is configured to display information to the user by the touchscreen and to detect instructions of the user by the touchscreen.

The user device 14 is configured to send the message as an email message and to send the message via an open transfer protocol, such as the Simple Mail Transfer Protocol. The open transfer protocol allows the user to send the message without using a specific software or network and/or without a prior registration. The email message is formed by a HyperText Markup Language (HTML) email message. The server system address and the user address are formed by an email address.

The communication between the user device 14 and the computation means 12 is performed via the Simple Mail Transfer Protocol (SMTP), and the Hypertext Transfer Protocol Secure (HTTPS). The communication between the user device 14 and the computation means 12 is performed by further servers. The opt-in system 100 further comprises a sending server 22 which is one of the further servers. Other of these further servers are not depicted in figure 1 and not described herein. The sending server 22 has a processing unit 20 configured to transfer messages from the user device 14 to the computation means 12. The opt-in system 100 further comprises a first verification server 18 having a first communication means 16 configured to provide a list of authorized processing units of sending servers with respect to addresses. The computation means 12 is configured to communicate with the first communication means 16 to verify whether the processing unit 20 of the sending server 22 was allowed to send the message from the user address. The authorized processing units are identified by their IP address, for example.

The sending server 22 includes a mail server. The processing unit 20 is formed by a computer. The processing unit 20 is configured to communicate between the user device 14 and the computation means 12 via the Simple Mail Transfer Protocol (SMTP).

The opt-in system 100 comprises a second verification server 26 having a second communication means 24 configured to provide public keys with respect to digital signatures of addresses. The computation means 12 is configured to communicate with the second communication means 24 to verify a digital signature of the message based on a public key of the user address. The first verification server 18 and the second verification server 26 are formed by one verification server. The first communication means 16 and the second communication means 24 are formed by one communication means. The first verification server 18 and the second verification server 26 are configured to provide functions of the Domain Name System (DNS). The computation means 12 is configured to use the email authentication method Reporting and Conformance (DMARC) to verify whether the message in form of an email was allowed to be sent from the user address, for example.

The computation means 12 is configured to evaluate whether the message includes an opt-in statement by comparing a content of the message with a predetermined content. The provided service information includes a content proposal. The content proposal includes an opt-in statement. The content proposal further includes its hash value. The computation means 12 is configured to evaluate whether the message includes an opt-in statement by checking whether the hash value included in the content of the message corresponds to a hash value of the content of the message. In addition, the computation means 12 is configured to evaluate by checking whether the predetermined content is included in the content of the message.

The user device 14 has a camera and is configured to read a QR code, including partially the service information, and is configured to retrieve data via a link, the retrieved data including partially the service information.

The user device 14 is further configured to create a prepopulated message suitable to be sent as the message to the computation means 12 based on the provided service information. The user device 14 is further be configured to create the prepopulated message by a command included in the provided service information, so that the prepopulated message includes a content proposal corresponding to the predetermined content, the server system address as recipient, and the user address as sender. The command is formed by a HTML mailto email link.

The computation means 12 is further configured to provide partially the provided service information upon a request of the user communicated by the user device 14 to the computation means 12 by retrieving data via the link. The computation means 12 is further configured to provide partially the provided service information to the user device 14 via the open transfer protocol Hypertext Transfer Protocol Secure (HTTPS). The user device is further configured to send the message via SMTP being a different communication way than HTTPS being the communication way used by the computation means 12 for providing partially the service information upon the request of the user to the user device 14.

The computation means 12 is further configured to use the user address in accordance with the obtained opt-in. The computation means 12 is configured to send a service message to the user address, wherein the user device 14 is further configured to receive the service message.

The server system 10 further comprises a storage means 28. The computation means 12 is further configured to store the user address, the message, and validation results of the obtained opt-in in the storage means 28 of the server system 10 in accordance with the obtained opt-in.

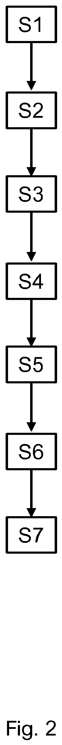

Figure 2 shows the method according to the one embodiment of the present invention, designed so as to obtain an opt-in of a user for providing a service to the user. The method is implemented using the opt-in system 100 including the server system 10.

The method comprises a step S1 of providing service information including a server system address, a step S2 of creating, by the user device 14, the prepopulated message, a step S3 of sending, by the user device 14 , a message from a user address to the server system address by an instruction of the user, a step S4 of receiving, by the computation means 12 , the message sent from the user address to the server system address; and a step S5 of validating, by the computation means 12, whether the message represents an opt-in, a step S6 of storing, by the computation means 12, the user address, the message, and the validation results of the obtained opt-in in the storage means 28, and a step S7 of using, by the computation means 12, the user address.

The step S1 of providing the service information comprises providing the QR code, readable by the user device 14 and including partially the service information. The QR code is provided to include the link for retrieving data by the user device 14, wherein the data includes partially the service information. The service information is provided partially by the computation means 12 upon the request of the user by the user device 14, wherein the computation means 12 provides the retrievable data. The retrievable data includes the command formed by a HTML mailto email link for creating the prepopulated message as a prepopulated email. The computation means 12 provides partially the service information to the user device 14 via the open transfer protocol Hypertext Transfer Protocol Secure (HTTPS). The user captures, by the user device 14, the QR code, which is, for example, packed on an exhibited product, and retrieves by the request the HTML mailto email link by the computation means 12.

The step S2 creates the prepopulated email suitable to be sent as the message formed by the email to the computation means 12, by the user device 14, based on the HTML mailto email link included in the provided service information. The computation means 12 provides the HTML mailto email link so that the created email includes the content proposal corresponding to the predetermined content, the server system address, formed by an email address of the server system, as recipient, and the user address, formed by an email address of the user, as sender. By requesting the HTML mailto email link, the user device 14 automatically opens a default email client with the prepopulated email based on the content proposal without further action of the user. The content proposal includes, for example, an opt-in statement for providing more information with respect to the exhibited product. The partial provision of the service information by the computation means 12 allows to provide the user device 14 with individual service information, such as an individualized service offer or a time stamp of the provision. For example, the content proposal also includes the time stamp of the provision by the computation means 12. This allows to form a simple spam filter, by the computation device 12, when receiving the message sent to the server system address by filtering out messages that have an old time stamp.

The step S3 of sending the message, by the user device 14, is be performed via SMTP being a different communication way than HTTPS being the communication way used by the computation means 12 for providing partially the service information upon the request of the user to the user device 14. If the user intends to make the opt-in according to the statement shown by the user device 14 via the touchscreen, the user instructs the sending of the email message via the touchscreen of the user device 14.

The step S5 of validating is performed by the steps of evaluating whether the email message includes an opt-in statement and verifying whether the email message was allowed to be sent from the user email address.

The step of verifying comprises to verify, by the computation means 12, whether the processing unit 20 of the sending server 22 used by the user device 14 to transfer the email message is allowed to send email messages from the user email address based on the list, such as based on an IP address of the processing unit 20 of the sending server 22. The step of verifying further comprise to verify, by the computation means 12, a digital signature of the email message based on a public key of the user email address.

The step of evaluating is be performed by comparing, by the computation means 12, a content of the email message with a predetermined content. The step of evaluating includes checking, by the computation means 12, whether the hash value included in the content of the email message corresponds to a hash value of the content of the email message. If the hash value does not correspond, the step of evaluating includes checking, by the computation means 12, whether the predetermined content is included in the content of the email message.

The step S7 of using, by the computation means 12, the user email address in accordance with the obtained opt-in, includes sending a service email message to the user email address, receivable by the user device 14. The user receives the service email message in accordance with its opt-in and is therefore provided with the intended service.

Although the messaging between the user device and computation means has been described as being conducted by email by way of example, the method and the opt-in system 100 may use other technologies to transmit and/or receive messages.

The method implemented by the opt-in system 100 provides an efficient way to obtain an opt-in of the user. The user can capture the provided service information and based thereon sent a single message to the server system 10 to opt in for a service. Without any further manual action by the user or a service provider, it is validated whether the message represents an opt-in. Before sending the message, the user can study the content of the message and its opt-in statement. Only if the user intends to make the opt-in according to the statement, the user instructs the sending of the message so that it is secured for both the service provider and the user for which service the user has opted in. The user may be a potential service recipient, service subscriber or customer. By verifying that the message was allowed to be sent from the user address, the opt in process is secured against someone with bad intentions, such as a spammer.

### Reference signs

- 10: server system
- 12: computation means
- 14: user device
- 16: first communication means
- 18: first verification server
- 20: processing unit
- 22: sending server
- 24: second communication means
- 26: second verification server
- 28: storage means
- 100: opt-in system

## Claims

1. A method for obtaining an opt-in of a user, more particularly an opt-in of a user for providing a service to the user, the method to be implemented using a server system (10) having a computation means (12) which is configured to communicate with a user device (14), the method comprising the steps of:
providing service information including a server system address;
sending, by the user device (14), a message from a user address to the server system address by an instruction of the user;
receiving, by the computation means (12), the message sent from the user address to the server system address;
validating, by the computation means (12), whether the message represents an opt-in by the steps of:
evaluating whether the message includes an opt-in statement; and
verifying whether the message was allowed to be sent from the user address.

2. The method according to claim 1, wherein the step of verifying comprises:
verifying, by the computation means (12) configured to communicate with a first communication means (16) of a first verification server (18) providing a list of authorized processing units of sending servers with respect to addresses, whether a processing unit (20) of a sending server (22) used by the user device (14) to transfer the message is allowed to send messages from the user address based on the list, and/or
verifying, by the computation means (12) configured to communicate with a second communication means (24) of a second verification server (26) providing public keys with respect to digital signatures of addresses, a digital signature of the message based on a public key of the user address.

3. The method according to claim 1 or 2, wherein the step of evaluating is performed by comparing, by the computation means (12), a content of the message with a predetermined content, wherein, preferably, the provided service information further includes a content proposal corresponding to the predetermined content.

4. The method according to one of the preceding claims, wherein the step of providing the service information comprises:
providing a machine-readable optical image, preferably a QR code, readable by the user device (14) and including partially the service information, and/or
providing a digital reference, preferably by a link, to data retrievable by the user device (14), the digital reference preferably provided in the machine-readable optical image, the data including partially the service information.

5. The method according to one of the preceding claims, further comprising a step of creating a prepopulated message suitable to be sent as the message to the computation means (12), by the user device (14), based on the provided service information, wherein, preferably, creating the prepopulated message, by the user device (14), by a command included in the provided service information, preferably, so that the prepopulated message includes a content proposal corresponding to the predetermined content, and/or the server system address as recipient, and/or the user address as sender.

6. The method according to one of the preceding claims, wherein the step of providing the service information comprises providing partially the service information by the computation means (12) upon a request of the user by the user device (14) communicated to the computation means (12), preferably by retrieving data via the digital reference.

7. An opt-in system (100) for obtaining an opt-in of a user, more particularly an opt-in of a user for providing a service to the user, the opt-in system comprising:
a user device (14); and
a server system (10) having a computation means (12) configured to communicate with the user device (14);
wherein the user device (14) is configured to send a message, by an instruction of the user, from a user address to a server system address based on provided service information including the server system address;
wherein the computation means (12) is configured:
to receive a message sent from a user address to the server system address; and
to validate whether the message represents an opt-in by:
evaluating whether the message includes an opt-in statement; and
verifying whether the message was allowed to be sent from the user address.

8. The opt-in system (100) according to claim 7 further comprising:
a sending server (22) having a processing unit (20) configured to transfer messages from the user device (14) to the computation means (12);
a first verification server (18) having a first communication means (16) configured to provide a list of authorized processing units of sending servers with respect to addresses;
wherein the computation means (12) is configured to communicate with the first communication means (16) to verify whether the processing unit (20) of the sending server (22) was allowed to send the message from the user address.

9. The opt-in system (100) according to claim 7 or 8 comprising a second verification server (26) having a second communication means (24) configured to provide public keys with respect to digital signatures of addresses;
wherein the computation means (12) is configured to communicate with the second communication means (24) to verify a digital signature of the message based a public key of the user address.

10. The opt-in system (100) according to one of claims 7 to 9,
wherein the computation means (12) is configured to evaluate whether the message includes an opt-in statement by comparing a content of the message with a predetermined content, wherein, preferably, the provided service information further includes a content proposal corresponding to the predetermined content.

11. The opt-in system (100) according to one of claims 7 to 10, wherein the user device (14) is further configured
to read a machine-readable optical image, preferably a QR code, including partially the service information, and/or
to retrieve data via a digital reference, preferably by a link, the digital reference preferably provided in the machine-readable optical image, the data including partially the service information.

12. The opt-in system (100) according to one of claims 7 to 11, wherein the user device (14) is further configured to create a prepopulated message suitable to be sent as the message to the computation means (12) based on the provided service information, wherein, preferably, the user device (14) is further configured to create the prepopulated message by a command included in the provided service information, preferably so that the prepopulated message includes a content proposal corresponding to the predetermined content, and/or the server system address as recipient, and/or the user address as sender.

13. The opt-in system (100) according to claims 7 to 12, wherein the computation means (12) is further configured to provide partially the provided service information upon a request of the user communicated by the user device (14) to the computation means (12), preferably by retrieving data via the digital reference.

14. The opt-in system (100) according to claims 7 to 13, wherein the computation means (12) is further configured to use the user address in accordance with the obtained opt-in, preferably, to send a service message to the user address, wherein the user device (14) is configured to receive the service message.

15. The opt-in system (100) according to claims 7 to 14, the computation means (12) is further configured to store the user address and/or the message, and/or validation results of the obtained opt-in in a storage means (28) of the server system (10) in accordance with the obtained opt-in.
